# FASCICULE DE BREVET EUROPEEN

(11) **EP 1 063 051 B1**
(45) Date de publication et mention de la délivrance du brevet: **22.10.2003**
(21) Numéro de dépôt: 99112314.2
(22) Date de dépôt: 26.06.1999
(51) Int. Cl.: B23Q 11/08

(54) **Dispositif nettoyeur pour surfaces plates, spécialement de machines**
Reinigungsvorrichtung für flache Oberflächen, ins besonders von Maschinen.
Cleaning device for flat surfaces, especially of machines

(43) Date de publication de la demande: 27.12.2000
(73) Titulaire: IRUDEX S.A., 20829 Itziar-deba (Guipuzcoa) (ES)
(72) Inventeur: Perez Ortuondo, José Angel, Deba (Guipuzcoa) (ES)
(74) Mandataire: Urizar Anasagasti, Jesus Maria

(56) Documents cités:
- EP-A- 0 290 822
- EP-A- 0 893 200
- DE-A- 1 803 448
- DE-A- 3 728 067
- DE-A- 4 343 741
- DE-B- 1 301 221

## Description

La présente invention concerne un dispositif nettoyeur qui s'applique spécialement aux machines de nettoyages de surfaces plates, ce dispositif étant placé à l'extrémité d'une pièce maître ayant un mouvement de déplacement latéral relatif par rapport à la surface à nettoyer, de telle façon que ledit élément nettoyeur agit en balayant la surface avec le mouvement habituel ou de fonctionnement de la pièce maître.

Un dispositif de ces caractéristiques a été décrit au Brevet GB-A-2 094 677. Au Brevet européen 0 290 822 on décrit un autre dispositif nettoyeur ayants des caractéristiques similaires, formé par une baguette-support en matériel rigide, qui s'accouple à l'extrémité de la pièce maître, sur laquelle on fixe l'élément nettoyeur proprement dit, en présentant sur la zone postérieure un évidement où s'accouple une buté (4) à configuration ondulée, agissant théoriquement comme une balayeuse lorsque la pièce maître est recueillie en se déplaçant le long de la surface plate à nettoyer.

Le dispositif ici préconisé comprend aussi un élément nettoyeur en matériel élastique, accouplé à travers une pièce-support sur la pièce maître, laquelle a lors de son fonctionnement habituel, un déplacement latéral relatif par rapport à la surface plate à nettoyer, qui est balayée en faisant que l'élément nettoyeur frôle la surface. Selon une caractéristique de la présente invention, ce dispositif comprend une pièce de base qui est fixée sur la pièce maître, sur la face en regard de la surface à nettoyer, en définissant frontalement un évidement de section en queue d'aronde, ouvert vers le haut ou vers la face en regard de la pièce maître et ayant une fenêtre coïncidant au bord avec celle-ci, cet évidement définissant un rail d'accouplment pour une saillie existant sur le côté de la pièce-support, en formant extérieurement à l'accouplement des deux éléments une surface continue. Ladite pièce-support présente sur la face opposée le corps vulcanisé du nettoyeur proprement dit, lequel dispose d'une section trapézoïdale isocélique, dont l'une des faces latérales bute contre la pièce de base précitée, tandis que le côté opposé, en conjonction avec la base de celui-ci conforme la lèvre balayeuse agissant sur la surface à nettoyer.

De cette façon l'ensemble de la pièce-support de l'élément nettoyeur est démontable par rapport à la pièce maître, qui a fixé sur celle-ci la pièce de base de fixation du nettoyeur, en permetant son rechange, soit en effectuant un déplacement latéral ou par pression, la saillie correspondant de la pièce-support faisant "clic" sur l'évidement présent sur la pièce de base.

On comprendra mieux l'objet de la présente invention à l'aide de la suivante description effectuée sur la base d'un exemple pratique de réalisation; cette description est réalisée sur la base des dessins du plan ci-joint, où:
La figure 1 représente une vue générale en section d'un dispositif nettoyeur.
La figure 2 montre dans une section équivalente à l'antérieure, le dispositif de la présente invention, la partie démontée du nettoyeur ou en train d'être montée.

L'objet de l'invention est de nettoyer ou de balayer une surface plate (2) présente sur tout type de machine, sur laquelle il existe un couvercle ou tout autre partie mobile (1), sur laquelle on place à l'extrémité et tout le long de celle-ci un élément balayeur (4) réalisé en un matériel flexible, de préférence vulcanisé de polyuréthane, ayant une friction minimale et expédiant la poussière ou le liquide déposé sur la surface (2) au fur et à mesure de son déplacement latéral, particulièrement grâce à une lèvre frontale (41), qui définit le côté extérieur conjointement avec la base.

Selon la présente invention pour la fixation de cet élément balayeur (4) on fixe à l'extrémité de la pièce maître (1) une pièce de base (3) par tout moyen, soit par rivetage, par des éléments traversants vissés, ou par soudure par points, etc... Cette pièce de base (3) présente une zone en porte à faux par rapport à la pièce maître (1) et sur la face en regard de celle-ci, il y a un évidement (31) de section en queue d'aronde qui va permettre de fixer sur celle-ci l'élément nettoyeur tel que l'on le décrit à la suite.

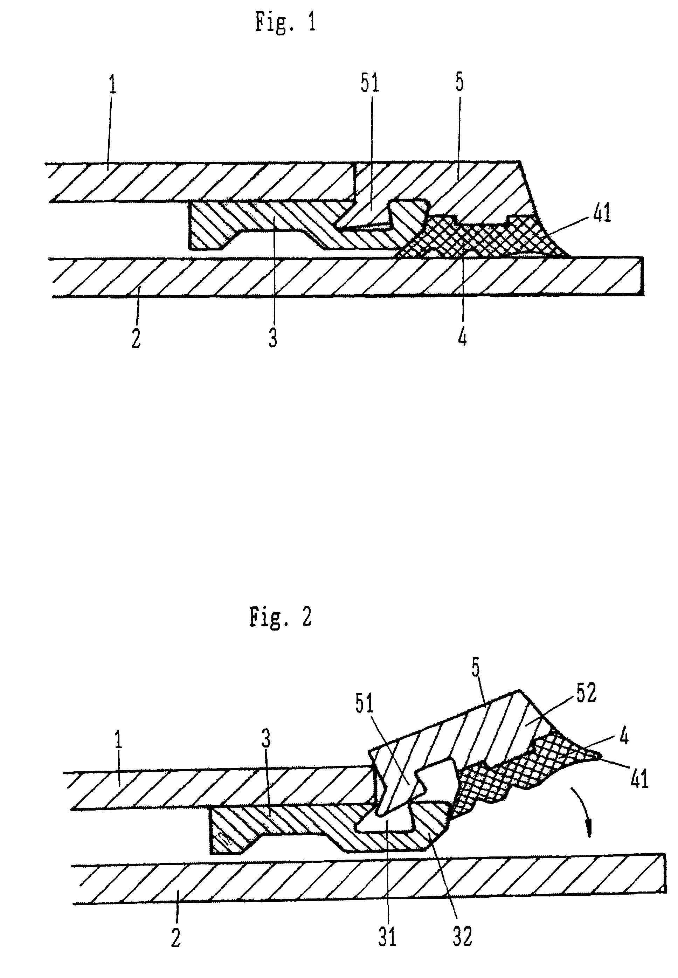

De sa part l'élément nettoyeur est défini à partir d'une pièce-support (5) présentant un rail (51) latéral, de forme équivalente à l'évidement (31), de telle façon qu'il s'accouple sur celle-ci, la pièce maître (1) et ladite pièce-support (5) présentant alors une surface extérieure continue tel que l'on peut le constater sur la figure 1. Sur cette pièce-support (5) on vulcanise sur une zone (52) l'élément balayeur (4), avec une section trapézoïdale isocélique et uni par sa petite base à la pièce-support (5), et dont un des côtés bute contre la surface,(32) de la pièce de base (3), tandis que le côté contraire définit en conjonction avec la base la lèvre balayeuse (41).

Ces éléments ainsi constitués et montés tel que l'on les a représentés dans la figure 1, le déplacement relatif entre les pièces (1) et (2) provoque le balayage de la surface (2) grâce à l'élément balayeur (4) et particulièrement à la lèvre (41), lorsque la pièce (1) avance sur la surface (2). Pour le rechange de l'élément balayeur il suffit de désaccoupler la pièce-support (5) de la pièce de base (3), ce qui fait que l'on n'a besoin d'aucun type d'opération mécanique, il suffit de déplacer latéralement la pièce (5); lors du montage d'un nouvel élément balayeur, une nervure (51) peut être introduite à nouveau dans un sens latéral dans l'évidement (31) ou bien, tel que l'on a représenté la figure 2, en l'introduisant frontalement et en faisant une pression vers le bas jusqu'à ce que les deux éléments s'accouplent au moyen d'un "clic", en demeurant positionnés adéquatement tel que le représente la figure 1.

On ne considère pas nécessaire de faire cette description plus étendue pour que tout expert en la matière comprenne la portée de l'invention et les avantages dérivés de celle-ci.

Les termes de la rédaction de ce mémoire devront toujours être considérés dans un sens large et non pas dans un sens limitatif.

Les matériels, la forme et l'aménagement des éléments seront susceptibles de varier, si toutefois celà ne suppose pas une altération des caractéristiques essentielles de l'invention que l'on revendique à la suite:

## Revendications

1. Dispositif nettoyeur pour des surfaces plates, spécialements de machines, comprenant un élément nettoyeur (4) en matériel élastique, accouplé à travers une pièce-support (5) sur la pièce maître (1), laquelle lors de son fonctionnement habituel réalise un déplacement latéral relatif par rapport à la surface plate (2), qui est balayée avec ledit mouvement par le nettoyeur (4) en frôlant la surface, **caractérisé en ce qu'**il comprend aussi une pièce de base (3), fixée sur la pièce maître (1) sur la face en regard de la surface (2), définissant frontalement et sur la face opposée un évidement (31), de section en queue d'aronde, ouverte vers le bas en regard de la pièce (1) par une fenêtre qui coïncide avec le bord de celle-ci; ledit évidement (31) définissant un rail d'accouplement pour une saillie (51) existant sur le côté d'une pièce (5), qui est adossé à la pièce maître (1) en formant extérieurement une surface continue, tandis que sur sa face opposée, sur la surface (52) existant du dehors de la pièce de base (3), on a vulcanisé le corps du nettoyeur (4) avec une section trapézoïdale isocélique, dont l'un des côtés bute contre la pièce de base (32), en même temps que le côté opposé définit en conjonction avec la base la lèvre balayeuse (41).

## Patentansprüche

1. Reinigungsvorrichtung für ebene Flächen, insbesondere von Maschinen, die ein aus elastischem Material bestehendes Reinigungselement (4) umfasst, welches über ein Trägerstück (5) mit dem Hauptstück (1) verbunden ist, das bei seinem üblichen Einsatz eine seitliche Bewegung in Bezug auf die ebene Fläche (2) ausführt, die durch diese Bewegung durch das Reinigungselement (4) gereinigt wird, wenn dieses Element über die Fläche streicht, **dadurch gekennzeichnet, dass** die Vorrichtung weiterhin ein Fussstück (3) umfasst, das an dem Hauptstück (1) an der der Oberfläche (2) gegenüberliegenden Seite befestigt ist und das an der Stirnseite sowie auf der gegenüberliegenden Seite eine Ausnehmung (31) bildet, mit einem Schwalbenschwanzquerschnitt, der auf der zu dem Stück (1) gerichteten Seite hin über ein Fenster geöffnet ist, das mit dem Rand dieses Stücks übereinstimmt; diese Ausnehmung (31) bildet eine Verbindungsschiene für einen an der Seite eines Stücks (5) vorgesehenen Vorsprung (51), wobei dieses Stück mit dem Hauptstück (1) verbunden wird und so aussen eine durchgehende Fläche bildet, während auf der gegenüberliegenden Seite, auf der Flache (52), die aussen an dem Fussstück (3) vorgesehen ist, der Reinigungskörper (4) anvulkanisiert ist, mit einem Querschnitt in Form eines gleichschenkligen Trapezes, von dem eine Seite auf das Fussstück (32) stösst, wobei die gegenüberliegende Seite zusammen mit der Basis die Reinigungslippe (41) bildet.

## Claims

1. A cleaning device for flat surfaces, especially of machines, comprising a cleaning element (4) of a flexible material coupled through a support part (5) to the hub part (1), which, in its normal functioning, carries out a relative lateral shift with regard to the flat surface (2), which is swept with said movement by the cleaning element (4) as it scrapes it, **characterized in that** it also comprises a base part (3) fixed to the hub part (1) on the side facing the surface (2), defining frontally and on the opposite side a notch (31), having a dovetail section, open towards the side face the part (1) by a window coinciding with the edge of the former; said notch (31) defining a coupling track for a protrusion (51) existing on the side of a part (5), which is placed against the hub part (1), outwardly forming a continuous surface, whereas on its opposite side, on the surface (52) existing outside of the base part (3), the body of the cleaning element (4) has been vulcanized, having an isosceles trapezoidal section, one of whose sides butts with the base part (32), at the same time that the opposite one, together with the base, defines the sweeper lip (41).
